# EUROPÄISCHE PATENTSCHRIFT

(11) **EP 1 914 522 B1**
(45) Veröffentlichungstag und Bekanntmachung des Hinweises auf die Patenterteilung: **14.09.2011**
(21) Anmeldenummer: 07116914.8
(22) Anmeldetag: 21.09.2007
(51) Int. Cl.: G01D 5/245, G01D 5/347, G01D 5/244, G01D 5/249

(54) **Vorrichtung und Verfahren zur Erfassung einer Position einer Antriebseinheit**
Device and method for recording the position of a drive unit
Procédé et dispositif destinés à la détermination de la position d'une unité d'entraînement

(30) Priorität: 16.10.2006 DE 102006048851
(43) Veröffentlichungstag der Anmeldung: 23.04.2008
(73) Patentinhaber: SIEMENS AKTIENGESELLSCHAFT, 80333 München (DE)
(72) Erfinder: Nolte, Uwe, 30890, Barsinghausen (DE); Krause, Uwe, 30982, Pattensen (DE); Ludwig, Heinz, 30823, Garbsen (DE); Sonntag, Guido, 30989, Gehrden (DE)

(56) Entgegenhaltungen:
- EP-A- 0 328 093
- EP-A- 0 335 161
- EP-A- 0 340 481
- JP-A- 62 213 587

## Beschreibung

Die Erfindung betrifft eine Vorrichtung und ein Verfahren zur Erfassung einer Position einer motorischen Antriebseinheit, z.B. einer automatisch betätigbaren Tür oder eines Fahrzeugsitzes.

Für die Steuerung von Motoren, insbesondere zur Betätigung von Schiebe- oder Aufzugstüren werden häufig Inkrementalgeber, auch Quadratur-Encoder genannt, eingesetzt, die Geschwindigkeit und Position erfassen können. Diese Inkrementalgeber sind für eine Vielzahl von Auflösungen verfügbar. Unter Auflösung wird beispielsweise verstanden, in wie viele Inkremente, d.h. Teilabschnitte, die von entsprechenden Signalen repräsentiert werden, eine bestimmte Strecke oder im Falle von als Drehimpulsgeber ausgebildeten Inkrementalgebern ein durchlaufener Vollkreis eingeteilt wird. Inkrementalgeber mit häufig benötigten Auflösungen sind wegen größerer produzierter Stückzahlen meist kostengünstig verfügbar. Wird jedoch eine seltenere Auflösung benötigt, sind die entsprechenden Inkrementalgeber oft überhaupt nicht oder nur teuer erhältlich. Um die Auflösung eines Inkrementalgebers auf ein gewünschtes Maß zu verringern, kann eine mechanische Anpassung, beispielsweise mittels eines Getriebes vorgenommen werden, was jedoch mit erhöhtem Platzbedarf und vergleichsweise hohen Kosten verbunden ist.

Aus EP 0 340 481 A1 ist eine Auswertung von Signalen eines Inkrementalgebers bekannt, bei der mindestens zwei gegeneinander phasenverschobene Tachosignale erzeugt werden, die nur dann gezählt werden, wenn eine zulässige Kombination der Tachosignale vorliegt. Zur Messung einer Drehzahl werden die Tachosignale über einen Umschalter und einen Frequenzteiler Zählern zugeführt, wobei den Zählern zusätzlich ein Referenzsignal zugeführt wird, dessen Frequenz variiert werden kann.

Der Erfindung liegt die Aufgabe zu Grunde, eine kostengünstige Vorrichtung und ein Verfahren zur Erfassung einer Position einer automatisch betätigbaren Tür anzugeben.

Die Aufgabe wird erfindungsgemäß gelöst durch eine Vorrichtung mit den Merkmalen des Anspruchs 1 und durch ein Verfahren mit den Merkmalen des Anspruchs 13.

Vorteilhafte Ausgestaltungen der Erfindung sind Gegenstand der Unteransprüche.

Bei der erfindungsgemäßen Vorrichtung zur Erfassung einer Position einer automatisch betätigbaren Tür ist die Position von einem Inkrementalgeber mit einer durch ein erstes Weg- oder Winkelinkrement beschriebenen ersten Genauigkeit erfassbar und einem Umsetzer zuführbar, von dem die erste Genauigkeit der Positionserfassung auf eine durch ein zweites Weg- oder Winkelinkrement beschriebene zweite Genauigkeit verringerbar ist. Ein solcher Umsetzer ermöglicht die Nutzung eines verfügbaren Inkrementalgebers, der eine feinere Auflösung, als die geforderte, aufweist. Die geforderte Auflösung ist mittels des Umsetzers erreichbar. Insbesondere dann, wenn der verwendete Inkrementalgeber ein preisgünstiges Massenprodukt ist, kann die Verwendung des Umsetzers, verglichen mit dem Einsatz eines speziellen, weniger verbreiteten Inkrementalgebers, erheblich kostengünstiger sein. Ist ein bislang verwendeter Inkrementalgeber nicht mehr verfügbar, kann dieser mit geringem Aufwand mittels des Umsetzers durch einen anderen ersetzt werden.

Dabei ist in dem Umsetzer ein endlicher Automat implementiert, was sowohl mit Mikroprozessoren als auch mit diskreten Bausteinen kombinatorischer und sequentieller Logik realisierbar ist. Ein endlicher Automat ist ein aus Zuständen, Zustandsübergängen und Aktionen bestehendes Modell des Verhaltens, dessen Menge der Zustände endlich ist. Ein endlicher Automat berücksichtigt bei seinen Aktionen, beispielsweise dem Setzen von Ausgangswerten wie den Signalen der Umsetzerkanäle, sowohl einen vorherigen Zustand der Eingangssignale, die neben den Inkrementalgeberkanälen auch die zurückgeführten Umsetzerkanäle umfassen können als auch deren Änderung zu einem neuen Zustand. Ein solcher endlicher Automat, auch state machine genannt, ist eine besonders geeignete Möglichkeit, die Auflösung des Inkrementalgebers ohne Verlust der Information über Drehsinn oder Richtungssinn umzusetzen.

Darüber hinaus sind Zustandsänderungen von dem endlichen Automaten als legal klassifizierbar, wenn sie die Kriterien eines Gray-Codes aufweisen und als illegal klassifizierbar, wenn sie diesen Kriterien nicht genügen. Gray-Code ist ein robustes Kodierungsverfahren, bei dem sich in einer Folge von Binärwerten zwei aufeinander folgende Binärwerte immer nur um ein Bit unterscheiden. Ein Abweichen von dieser Regel ist ein Indiz für einen Fehler. Bei der Kodierung binärer Signale auf den Inkrementalgeberkanälen ändert sich bei einem gegebenen Winkel oder Ort immer nur das Signal eines der Inkrementalgeberkanäle. Identifiziert der endliche Automat nun eine Änderung beider Werte, kann er den Zustandsübergang ignorieren bzw. eine Fehlerbehandlung auslösen.

Vorzugsweise sind von dem Inkrementalgeber auf einem ersten und einem zweiten Inkrementalgeberkanal Signale ausgebbar, die ein jeweils vorgegebenes erstes vom Inkrementalgeber durchlaufenes Weg- oder Winkelinkrement repräsentieren. Die Signale des zweiten Inkrementalgeberkanals weisen gegenüber den Signalen des ersten Inkrementalgeberkanals bei gleicher Signalform eine Phasenverschiebung auf, deren Phasenwinkel im Falle eines ersten Richtungs- oder Drehsinns des Inkrementalgebers positiv und im Falle eines zweiten, entgegen gesetzten Richtungs- oder Drehsinns des Inkrementalgebers negativ ist. Dem Inkrementalgeber ist ein Umsetzer nachgeschaltet, dem die Signale der Inkrementalgeberkanäle zuführbar sind und mittels dessen auf einem ersten und einem zweiten Umsetzerkanal Signale ausgebbar sind, die ein zweites Weg- oder Winkelinkrement repräsentieren. Dieses zweite Weg- oder Winkelinkrement ist ein vorgegebenes, ganzzahliges Vielfaches des ersten Weg- oder Winkelinkrements. Die Phasenverschiebung zwischen dem ersten und dem zweiten Umsetzerkanal entspricht der Phasenverschiebung zwischen dem ersten und dem zweiten Inkrementalgeberkanal. Der Inkrementalgeber kann beispielsweise mit einem die Aufzugs- oder Schiebetür antreibenden Motor verbunden sein, um die Position der Tür zu erfassen.

Vorzugsweise ist der Inkrementalgeber als Drehimpulsgeber ausgebildet, da sich die Position des Motors damit besonders einfach und präzise erfassen lässt. Der Inkrementalgeber liefert in diesem Fall auf seinen beiden Kanälen ein Winkelinkrement. Anhand der Phasenlage der beiden Inkrementalgeberkanäle sind der Drehsinn des Motors und damit die Bewegungsrichtung der Aufzugstür bestimmbar.

Die Signale des Inkrementalgebers und des Umsetzers können kontinuierlich sein. Bevorzugt sind sie jedoch binär, so dass ihre Verarbeitung mittels Rechentechnik oder binärer Logik vereinfacht wird.

Der Phasenwinkel beträgt vorzugsweise +90° oder -90°. Möglich ist prinzipiell jeder Wert aus den Intervallen 0 < Phasenwinkel < 180° und -180° < Phasenwinkel < 0, um den Drehsinn zu erkennen. Ein Phasenwinkel von 90° bzw. -90° ist jedoch der einzige für beide Drehsinne symmetrische Fall, was die Verarbeitung im Umsetzer erheblich vereinfacht.

Vorzugsweise ist das zweite Weg- oder Winkelinkrement zweimal so groß wie das erste Weg- oder Winkelinkrement, da eine Halbierung der Auflösung besonders häufig benötigt wird. Andere ganzzahlige Teilerverhältnisse sind jedoch ebenfalls problemlos realisierbar.

In einer bevorzugten Ausführungsform umfasst der Umsetzer einen Mikroprozessor. Insbesondere bei Verwendung binärer Signale ist ein Mikroprozessor bestens zur programmierten Umsetzung der Auflösung des Inkrementalgebers geeignet. Die Umsetzung ist so meist kostengünstiger und vor allem flexibler realisierbar als mit fest verdrahteter Logik.

Vorzugsweise handelt es sich bei dem Mikroprozessor um einen Mikrocontroller. Mikrocontroller sind Ein-Chip-Computersysteme, die alle oder einen großen Teil der Komponenten eines Computersystems, wie CPU, Programmspeicher auf ROM oder Flash-Basis, Ein/Ausgabeschnittstellen und gegebenenfalls Arbeitsspeicher umfassen. Der Umsetzer ist auf diese Weise besonders platzsparend und kostengünstig möglich.

Vorzugsweise ist der Mikroprozessor mittels eines Watchdogs in einen definierten Zustand versetzbar und der Watchdog durch den endlichen Automaten rücksetzbar oder setzbar. Ein Watchdog ist eine Sicherheitseinrichtung in einem Mikroprozessor, die sicherstellt, dass die auf dem Mikroprozessor implementierten Prozesse nicht komplett stehen bleiben, wenn einer der Prozesse in einem fehlerhaften Zustand ist. Hierzu weist der Watchdog meist einen Zähler auf, der inkrementiert oder dekrementiert wird. Die Prozesse können den Zähler regelmäßig zurücksetzen oder setzen, solange sie beispielsweise planmäßig Schleifen durchlaufen. Wird der Zähler jedoch nicht zurückgesetzt oder gesetzt, deutet dies darauf hin, dass ein Prozess einen fehlerhaften Zustand erreicht hat. Erreicht der Zähler infolgedessen den gesetzten Wert oder den Wert Null, führt der Watchdog einen Sprung zu einem Prozess aus, der wieder einen definierten Zustand herstellt. Auf diese Weise kann vermieden werden, dass der Umsetzer aufgrund eines fehlerhaften Zustandes dauerhaft keine Signale des Inkrementalgebers mehr umsetzt.

In einer besonders bevorzugten Ausführungsform ist der vorhergehende Zustand zumindest eines der Signale der Inkrementalgeberkanäle und/oder Umsetzerkanäle durch einen Sprung in eine von mindestens zwei im endlichen Automaten vorgesehenen Schleifen einer Programmausführung kodierbar und durch eine Zustandsänderung der Zustand der Umsetzerkanäle in Abhängigkeit von der jeweils durchlaufenen Schleife veränderbar. Auf diese Weise wird kein Arbeitsspeicher oder zusätzliches Register für die Speicherung des vorherigen Zustandes benötigt, so dass auf Arbeitsspeicher (RAM) verzichtet werden kann. Dadurch entfallen zeitaufwändige Speichertests und der Umsetzer wird kostengünstiger durch Wegfall des Arbeitsspeichers und die Möglichkeit des Einsatzes sehr einfach aufgebauter Mikroprozessoren. In Verbindung mit dem endlichen Automaten ergibt sich eine besonders schnelle Ausführung mit geringstem Ressourcenverbrauch, besonders wenn der endliche Automat eine Look-up-Table enthält, auf die mit berechneten Sprüngen zugegriffen wird. Auf diese Weise kann jeder Durchlauf mit vier bis fünf Assemblerbefehlen erfolgen.

Ausführungsbeispiele der Erfindung werden im Folgenden anhand von Zeichnungen näher erläutert. Darin zeigen:
- FIG 1: eine schematische Darstellung eines Inkrementalgebers mit einem Umsetzer,
- FIG 2: ein Impulsdiagramm binärer Signale zweier Inkrementalgeberkanäle und zweier Umsetzerkanäle für eine Umsetzung auf die Hälfte der Auflösung des Inkrementalgebers und
- FIG 3: einen Programmablaufplan mit der Implementierung eines endlichen Automaten zur Halbierung der Auflösung eines Inkrementalgebers.

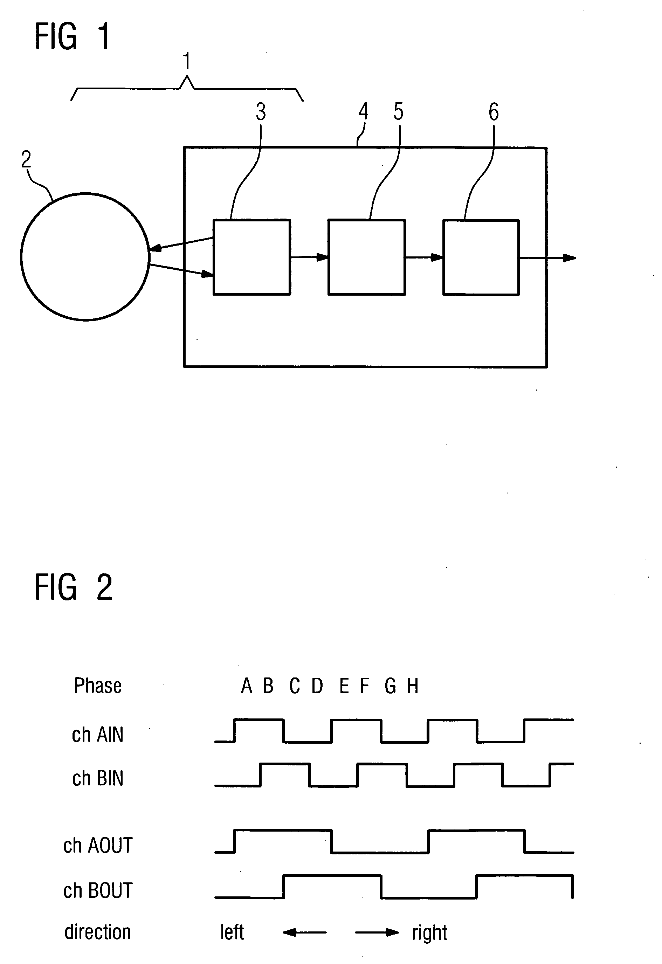

FIG 1 zeigt eine schematische Darstellung eines Inkrementalgebers 1 mit einem Umsetzer 5. Der Inkrementalgeber 1 ist als Drehimpulsgeber ausgebildet und umfasst eine drehbare Blendenscheibe 2, die mit der Welle einer Antriebseinheit, z. B. eines Elektro-Motors für eine automatisch betätigbare Tür (nicht gezeigt) verbunden sein kann. Weiter umfasst der Inkrementalgeber 1 eine Sensoreinheit 3 mit zwei optischen Sensoren, die von der Blendenscheibe 2 reflektiertes Licht oder Licht, dass Öffnungen in der Blendenscheibe 2 passiert, detektieren. Die Blendenscheibe 2 ist im vorliegenden Beispiel in 200 Winkelinkremente aufgeteilt, das heißt jeder der Sensoren registriert pro Umdrehung der Blendenscheibe 2 zweihundert Impulse. Die beiden Sensoren sind dabei so versetzt positioniert, dass einer der Sensoren sein Signal mit einer Phasenverschiebung gegenüber dem anderen Sensoren erhält. Im gewählten Beispiel beträgt der Phasenwinkel für einen ersten Drehsinn der Blendenscheibe 2 90° und für einen zweiten, entgegen gesetzten Drehsinn -90°, so dass an der Phasenlage der beiden Signale der Drehsinn ablesbar ist.

Die Signale liegen im vorliegenden Beispiel zumindest an den Ausgängen der Sensoreinheit, die durch die nicht separat dargestellten Inkrementalgeberkanäle AIN und BIN gebildet wird, in binärer Form vor. Das von den Sensoren empfangene Signal ist in aller Regel kontinuierlich und wird durch Komparatoren oder ähnliche Maßnahmen digitalisiert. Die Sensoreinheit 3 ist auf einer Leiterplatte 4 untergebracht, die außerdem den Umsetzer 5 und eine Schnittstelle 6 enthält. Die Signale der Inkrementalgeberkanäle AIN, BIN werden vom Umsetzer 5 so umgesetzt, dass auf dessen nicht einzeln gezeigten Umsetzerkanälen AOUT, BOUT Signale mit der halben Auflösung, also 100 Winkelinkremente pro Umdrehung der Blendenscheibe 2 entstehen, wobei die Phasenverschiebung von 90° bzw. -90° zwischen den Signalen der Umsetzerkanäle AOUT, BOUT erhalten bleibt. Diese Signale werden einer Schnittstelle 6 zugeführt, die im einfachsten Fall nur einen Steckverbinder umfasst, von dem die Signale einer nicht gezeigten Steuereinheit zur Auswertung und weiteren Bearbeitung zuführbar sind.

Der Umsetzer 5 umfasst einen Mikroprozessor bzw. Mikrocontroller, in dem softwaremäßig ein endlicher Automat implementiert ist, der den Zustand der Inkrementalgeberkanäle AIN, BIN und der Umsetzerkanäle AOUT und BOUT als Eingangssignale erhält und bei infolge Drehen der Blendenscheibe 2 auftretenden Änderungen der Signale der Inkrementalgeberkanäle abhängig vom vorherigen Zustand die Signale der Umsetzerkanäle AOUT, BOUT verändert oder belässt bzw. bei illegalen Zustandsänderungen eine Fehlerbehandlung auslöst. Die Umsetzerkanäle AOUT, BOUT sind intern auf die Eingänge des endlichen Automaten zurückgeführt.

In FIG 2 ist ein Impulsdiagramm binärer Signale zweier Inkrementalgeberkanäle AIN, BIN und zweier Umsetzerkanäle AOUT, BOUT für eine Umsetzung auf die Hälfte der Auflösung des Inkrementalgebers 1 gezeigt. Der Inkrementalgeberkanal AIN zeigt periodische Folgen von Impulsen, die jeweils ein Winkelinkrement repräsentieren. Bei einer Auflösung von 200 Winkelinkrementen pro Umdrehung (200ppr) entspricht ein Winkelinkrement einem Winkel von 1,8°. Der Inkrementalgeberkanal BIN zeigt die gleichen periodischen Folgen von Impulsen, allerdings in einem ersten Drehsinn des Inkrementalgebers 1 (hier mit right gekennzeichnet) dem Signal des Inkrementalgeberkanals AIN um 90° Phasenwinkel nachlaufend. Im entgegen gesetzten Drehsinn (hier mit left bezeichnet) läuft das Signal des Inkrementalgeberkanals BIN dem Signal des Inkrementalgeberkanals AIN hingegen 90° voraus. Unter den Signalen der Inkrementalgeberkanäle AIN, BIN sind die vom Umsetzer 5 generierten Signale der Umsetzerkanäle AOUT, BOUT gezeigt, die ein Signal mit einer Auflösung von 100 ppr liefern, wobei der Phasenwinkel von 90° bzw. -90° zwischen den Signalen der Umsetzerkanäle AOUT, BOUT erhalten bleibt. Über dem Signal des Inkrementalgeberkanals AIN angezeigte Phasen A bis H zeigen acht mögliche Zustände der Eingangssignale des endlichen Automaten, die sich periodisch wiederholen. Aus der Kenntnis des vorherigen und des gegenwärtigen Zustands trifft der endliche Automat eine Entscheidung über das Ändern oder Beibehalten der Signale der Umsetzerkanäle AOUT, BOUT.

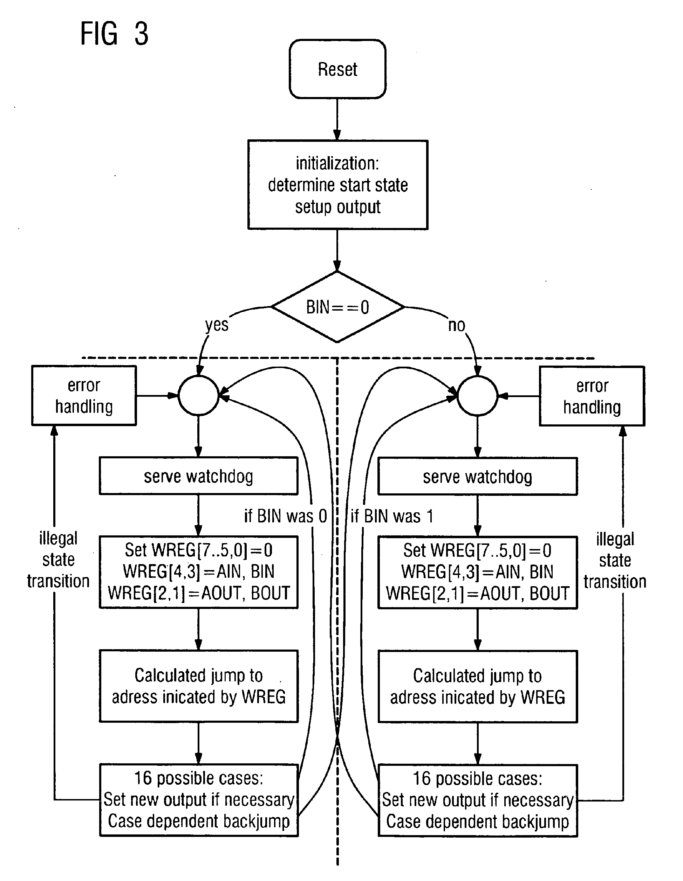

FIG 3 zeigt einen Programmablaufplan mit der Implementierung eines endlichen Automaten zur Halbierung der Auflösung des Inkrementalgebers 1. Der endliche Automat startet mit einem RESET, wodurch ein definierter Startzustand erreicht wird. Abhängig vom Wert des Signals auf dem Inkrementalgeberkanal BIN durchläuft er anschließend die linke Schleife (BIN=0, niedriges Potential) oder die rechte Schleife (BIN=1, hohes Potential). Die Einteilung in diese zwei Schleifen ist als Bestimmung eines Zustandes vor einem Zustandsübergang, der nur den Wert des Inkrementalgeberkanals BIN berücksichtigt, für eine Umsetzung mit Halbierung der Auflösung ausreichend. Die Schleifen sind in einem ROM oder einem Flash-Speicher programmiert. Auf diese Weise wird kein Arbeitsspeicher (RAM) benötigt. Die jeweilige Schleife wird ständig durchlaufen, ohne dass eine Änderung der Signale der Inkrementalgeberkanäle AIN, BIN abgewartet wird.

Zu Beginn jeder der Schleifen wird der Watchdog bedient, das heißt durch Setzen eines Zählers daran gehindert, ein erneutes RESET auszulösen. Anschließend wird der aktuelle Zustand der Signale der Inkrementalgeberkanäle AIN, BIN und der Umsetzerkanäle AOUT, BOUT ermittelt und in ausgewählte Bits eines Arbeitsregisters WREG geschrieben. Der Wert dieses Arbeitsregisters WREG wird für die Berechnung eines Sprunges genutzt. In jeder der beiden Schleifen, das heißt abhängig vom vorherigen Wert des Signals auf dem Inkrementalgeberkanal BIN gibt es wegen der vier als Eingangssignale genutzten Signale der Inkrementalgeberkanäle AIN, BIN und der Umsetzerkanäle AOUT, BOUT theoretisch 2⁴, also sechzehn mögliche Zustände der Eingangssignale. Da die Signale jedoch den Kriterien eines Gray-Code genügen müssen, können in jeder der Schleifen jeweils vier der Zustände als illegal bewertet werden, was auf einen Fehler, wie z.B. einen Kurzschluss zwischen den Inkrementalgeberkanälen AIN, BIN hinweist und zu einer Fehlerbehandlung und zu einem Sprung an den Anfang der selben Schleife führt. Bei weiteren acht der Zustände erfolgt in jeder der Schleifen keine Aktion, das heißt keine Änderung der Signale der Umsetzerkanäle AOUT, BOUT. Eine Aktion in Form einer Änderung der Signale der Umsetzerkanäle AOUT, BOUT erfolgt lediglich bei den restlichen vier Zuständen. An der Adresse, zu der der mittels des Arbeitsregisters WREG berechnete Sprung führt, werden für die jeweils erforderliche Aktion benötigte Befehle abgearbeitet, also beispielsweise der Wert eines Ein/Ausgaberegisters geändert. Diese Art der Indizierung der auszuführenden Aktion durch einen berechneten Sprung kann auch als Look-up Table (LUT) bezeichnet werden. In Abhängigkeit davon, welchen Zustand das Signal des Inkrementalgeberkanals BIN aktuell hat, erfolgt bei allen Zuständen, die nicht als illegal identifiziert wurden, ein Rücksprung auf den Anfang derselben oder der jeweils anderen Schleife. Tabelle 1 zeigt, welche Aktionen bei welchem Zustand der Eingangssignale in Abhängigkeit vom vorherigen Zustand des Signals des Inkrementalgeberkanals BIN von dem endlichen Automaten ausgeführt werden.

**Tabelle 1: Aktionen bei Umsetzung mit Halbierung der Auflösung**

| AIN | BIN | AOUT | BOUT | Aktion, wenn zuvor BIN==0 (linke Schleife) | Aktion, wenn zuvor BIN==1 (rechte Schleife) |
|---|---|---|---|---|---|
| 0 | 0 | 0 | 0 | Keine | Keine |
| 0 | 0 | 0 | 1 | AOUT=1 | Illegal |
| 0 | 0 | 1 | 0 | AOUT=0 | Illegal |
| 0 | 0 | 1 | 1 | Keine | Keine |
| 0 | 1 | 0 | 0 | Keine | Keine |
| 0 | 1 | 0 | 1 | Keine | BOUT=0 |
| 0 | 1 | 1 | 0 | Keine | BOUT=1 |
| 0 | 1 | 1 | 1 | Keine | Keine |
| 1 | 0 | 0 | 0 | AOUT=1 | Illegal |
| 1 | 0 | 0 | 1 | Illegal | Keine |
| 1 | 0 | 1 | 0 | Illegal | Keine |
| 1 | 0 | 1 | 1 | AOUT=0 | Illegal |
| 1 | 1 | 0 | 0 | Illegal | BOUT=1 |
| 1 | 1 | 0 | 1 | Keine | Keine |
| 1 | 1 | 1 | 0 | Keine | Keine |
| 1 | 1 | 1 | 1 | Illegal | BOUT=0 |

Eine andere Anzahl von Winkelinkrementen ist möglich.

Ein anderes ganzzahliges Umsetzerverhältnis ist problemlos durch Umprogrammierung des Umsetzers 5 erreichbar.

Als Inkrementalgeber 1 kommen beispielsweise auch Bauteile in Frage, die ein Weginkrement abhängig von einer linear zurückgelegten Strecke als Signale codieren.

Inkrementalgeber 1 können beispielsweise nach photoelektrischen oder magnetischen Prinzipien wirken.

Die Digitalisierung der Signale der Inkrementalgeberkanäle AIN, BIN kann auch im Umsetzer 5 erfolgen.

Der endliche Automat kann mittels diskreter Bausteine kombinatorischer und sequentieller Logik ohne Mikroprozessor realisiert sein.

Ein von 90° bzw. -90° abweichender Phasenwinkel zwischen den Inkrementalgeberkanälen AIN, BIN ist in Grenzen möglich.

## Patentansprüche

1. Vorrichtung zur Erfassung einer Position einer Antriebseinheit, bei der die Position von einem Inkrementalgeber (1) mit einer durch ein erstes Weg- oder Winkelinkrement beschriebenen ersten Genauigkeit erfassbar und einem Umsetzer (5) zuführbar ist, von dem die erste Genauigkeit der Positionserfassung auf eine durch ein zweites Weg- oder Winkelinkrement beschriebene zweite Genauigkeit verringerbar ist,
**dadurch gekennzeichnet,**
**dass** in dem Umsetzer (5) ein endlicher Automat implementiert ist, dass von dem endlichen Automaten der gegenwärtige Zustand aller und der vorhergehende Zustand zumindest eines der Signale der Inkrementalgeberkanäle (AIN, BIN) und/oder Umsetzerkanäle (AOUT, BOUT) erfassbar und entsprechend auf diese Weise identifizierbarer Zustandsänderungen der Zustand der Umsetzerkanäle (AOUT, BOUT) veränderbar ist, dass Zustandsänderungen als legal klassifizierbar sind, wenn sie den Kriterien eines Gray-Codes genügen und als illegal klassifizierbar sind, wenn sie diesen Kriterien nicht genügen und dass durch eine illegale Zustandsänderung eine Fehlerbehandlung auslösbar ist.

2. Vorrichtung nach Anspruch 1, **dadurch gekennzeichnet, dass** von dem Inkrementalgeber (1) auf einem ersten und einem zweiten Inkrementalgeberkanal (AIN, BIN) Signale ausgebbar sind, die das jeweils vorgegebene, vom Inkrementalgeber (1) durchlaufene erste Weg- oder Winkelinkrement repräsentieren, wobei die Signale des zweiten Inkrementalgeberkanals (BIN) gegenüber den Signalen des ersten Inkrementalgeberkanals (AIN) bei gleicher Signalform eine Phasenverschiebung aufweisen, deren Phasenwinkel im Falle eines ersten Richtungs- oder Drehsinns des Inkrementalgebers (1) positiv und im Falle eines zweiten, entgegen gesetzten Richtungs- oder Drehsinns des Inkrementalgebers (1) negativ ist, wobei der Umsetzer (5) dem Inkrementalgeber (1) nachgeschaltet ist und dem Umsetzer (5) die Signale der Inkrementalgeberkanäle (AIN, BIN) zuführbar sind und mittels des Umsetzers (5) auf einem ersten und einem zweiten Umsetzerkanal (AOUT, BOUT) Signale ausgebbar sind, die das zweite Weg- oder Winkelinkrement repräsentieren, das ein vorgegebenes, ganzzahliges Vielfaches des ersten Weg- oder Winkelinkrements ist, wobei die Phasenverschiebung zwischen dem ersten und dem zweiten Umsetzerkanal (AOUT, BOUT) der Phasenverschiebung zwischen dem ersten und dem zweiten Inkrementalgeberkanal (AIN, BIN) entspricht.

3. Vorrichtung nach einem der Ansprüche 1 oder 2, **dadurch gekennzeichnet, dass** der Inkrementalgeber (1) als Drehimpulsgeber ausgebildet ist.

4. Vorrichtung nach einem der Ansprüche 1 bis 3, **dadurch gekennzeichnet, dass** alle Signale binär sind.

5. Vorrichtung nach einem der vorhergehenden Ansprüche, **dadurch gekennzeichnet, dass** der Phasenwinkel +90° oder -90° beträgt.

6. Vorrichtung nach einem der vorhergehenden Ansprüche, **dadurch gekennzeichnet, dass** das zweite Weg- oder Winkelinkrement zweimal so groß wie das erste Weg- oder Winkelinkrement ist.

7. Vorrichtung nach einem der vorhergehenden Ansprüche, **dadurch gekennzeichnet, dass** der Umsetzer (5) einen Mikroprozessor umfasst.

8. Vorrichtung nach Anspruch 7, **dadurch gekennzeichnet, dass** der Mikroprozessor als Mikrocontroller ausgebildet ist.

9. Vorrichtung nach Anspruch 7 oder 8, **dadurch gekennzeichnet, dass** der Mikroprozessor mittels eines Watchdogs in einen definierten Zustand versetzbar ist und dass der Watchdog durch den endlichen Automaten setzbar oder rücksetzbar ist.

10. Vorrichtung nach einem der vorhergehenden Ansprüche, **dadurch gekennzeichnet, dass** der vorhergehende Zustand zumindest eines der Signale der Inkrementalgeberkanäle (AIN, BIN) und/oder Umsetzerkanäle (AOUT, BOUT) durch einen Sprung in eine von mindestens zwei im endlichen Automaten vorgesehenen Schleifen einer Programmausführung kodierbar und durch eine Zustandsänderung der Zustand der Umsetzerkanäle (AOUT, BOUT) in Abhängigkeit von der jeweils durchlaufenen Schleife veränderbar ist.

11. Vorrichtung nach einem der vorhergehenden Ansprüche, **dadurch gekennzeichnet, dass** im endlichen Automaten mindestens eine Look-up-Table vorgesehen ist.

12. Vorrichtung nach einem der vorhergehenden Ansprüche, **dadurch gekennzeichnet, dass** die Antriebseinheit ein Motor für eine motorisch betriebene Tür ist.

13. Verfahren zur Erfassung einer Position einer Antriebseinheit, bei dem von einem Inkrementalgeber (1) in Abhängigkeit von der Position oder einer Positionsänderung der Tür auf einem ersten und einem zweiten Inkrementalgeberkanal (AIN, BIN) Signale ausgegeben werden, die ein jeweils vorgegebenes, vom Inkrementalgeber (1) durchlaufenes erstes Weg- oder Winkelinkrement repräsentieren, wobei die Signale des zweiten Inkrementalgeberkanals (BIN) gegenüber den Signalen des ersten Inkrementalgeberkanals (AIN) bei gleicher Signalform eine Phasenverschiebung aufweisen, deren Phasenwinkel im Falle eines ersten Richtungs- oder Drehsinns des Inkrementalgebers (1) positiv und im Falle eines zweiten, entgegen gesetzten Richtungs- oder Drehsinns des Inkrementalgebers (1) negativ ist, wobei ein Umsetzer (5) dem Inkrementalgeber (1) nachgeschaltet ist und dem Umsetzer (5) die Signale der Inkrementalgeberkanäle (AIN, BIN) zugeführt werden und mittels des Umsetzers (5) auf einem ersten und einem zweiten Umsetzerkanal (AOUT, BOUT) Signale ausgegeben werden, die ein zweites Weg- oder Winkelinkrement repräsentieren, das ein vorgegebenes, ganzzahliges Vielfaches des ersten Weg- oder Winkelinkrements ist, wobei die Phasenverschiebung zwischen dem ersten und dem zweiten Umsetzerkanal (AOUT, BOUT) der Phasenverschiebung zwischen dem ersten und dem zweiten Inkrementalgeberkanal (AIN, BIN) entspricht,
**dadurch gekennzeichnet,**
**dass** von einem im Umsetzer (5) implementierten endlichen Automaten der gegenwärtige Zustand aller und der vorhergehende Zustand zumindest eines der Signale der Inkrementalgeberkanäle (AIN, BIN) und/oder Umsetzerkanäle (AOUT, BOUT) erfasst und entsprechend auf diese Weise identifizierbarer Zustandsänderungen der Zustand der Umsetzerkanäle (AOUT, BOUT) optional verändert wird, dass Zustandsänderungen von dem endlichen Automaten als legal klassifiziert werden, wenn sie den Kriterien eines Gray-Codes genügen, und als illegal klassifiziert werden, wenn sie diesen Kriterien nicht genügen, und dass der endliche Automat bei illegalen Zustandsänderungen eine Fehlerbehandlung auslöst.

14. Verfahren nach Anspruch 13, **dadurch gekennzeichnet, dass** der vorhergehende Zustand zumindest eines der Signale der Inkrementalgeberkanäle (AIN, BIN) und/oder Umsetzerkanäle (AOUT, BOUT) durch einen Sprung in eine von mindestens zwei im endlichen Automaten vorgesehenen Schleifen einer Programmausführung kodiert und durch eine Zustandsänderung der Zustand der Umsetzerkanäle (AOUT, BOUT) in Abhängigkeit von der jeweils durchlaufenen Schleife verändert oder belassen wird.

## Claims

1. Device for sensing a position of a drive unit, in which the position can be sensed by an incremental signal transmitter (1) having a first degree of accuracy which is described by a first travel increment or angle increment, and can be fed to a converter (5) by which the first degree of accuracy of the sensing of the position can be reduced to a second degree of accuracy which is described by a second travel increment or angle increment, **characterized in that** a finite automatic apparatus is implemented in the converter (5), that the finite automatic apparatus can sense the present state of all of the signals, and the preceding state of at least one of the signals, of the incremental signal transmitter channels (AIN, BIN) and/or converter channels (AOUT, BOUT) and the state of the converter channels (AOUT, BOUT) can be changed in accordance with changes in state which can be identified in this way, that changes in state can be classified as legal if they satisfy the criteria of a Gray code and can be classified as illegal if they do not satisfy these criteria and that troubleshooting can be initiated by an illegal change in state.

2. Device according to Claim 1, **characterized in that** signals which represent the respectively predefined first travel increment or angle increment which is run through by the incremental signal transmitter (1) can be output by the incremental signal transmitter (1) on a first and second incremental signal transmitter channel (AIN, BIN), wherein the signals of the second incremental signal transmitter (BIN) have, compared to the signals of the first incremental signal transmitter channel (AIN) given an identical waveform, a phase shift whose phase angle is positive in the case of a first direction or rotational sense of the incremental signal transmitter (1) and negative in the case of a second, opposed direction or rotational sense of the incremental signal transmitter (1), wherein the converter (5) is connected downstream of the incremental signal transmitter (1), and the signals of the incremental signal transmitter channels (AIN, BIN) can be fed to the converter (5) and signals which represent the second travel increment or angle increment which is a predefined integral multiple of the travel increment or angle increment can be output on a first and second converter channel (AOUT, BOUT) by means of the converter (5), wherein the phase shift between the first and second converter channels (AOUT, BOUT) corresponds to the phase shift between the first and second incremental signal transmitter channels (AIN, BIN).

3. Device according to one Claims 1 or 2, **characterized in that** the incremental signal transmitter (1) is embodied as a rotary encoder.

4. Device according to one of Claims 1 to 3, **characterized in that** all the signals are binary.

5. Device according to one of the preceding claims, **characterized in that** the phase angle is +90° or -90°.

6. Device according to one of the preceding claims, **characterized in that** the second travel increment or angle increment is twice as large as the first travel increment or angle increment.

7. Device according to one of the preceding claims, **characterized in that** the converter (5) comprises a microprocessor.

8. Device according to Claim 7, **characterized in that** the microprocessor is embodied as a microcontroller.

9. Device according to Claim 7 or 8, **characterized in that** the microprocessor can be placed in a defined state by means of a watchdog, and **in that** the watchdog can be set or reset by the finite automatic apparatus.

10. Device according to one of the preceding claims, **characterized in that** the preceding state of at least one of the signals of the incremental signal transmitter channels (AIN, BIN) and/or converter channels (AOUT, BOUT) can be encoded by means of a jump into one of at least two loops of a program execution which are provided in the finite automatic apparatus, and the state of the converter channels (AOUT, BOUT) can be changed by a change in state as a function of the loop which has been respectively run through.

11. Device according to one of the preceding claims, **characterized in that** at least one lookup table is provided in the finite automatic apparatus.

12. Device according to one of the preceding claims, **characterized in that** the drive unit is a motor for a motor-operated door.

13. Method for sensing a position of a drive unit, in which signals which represent a respectively predefined travel increment or angle increment which is run through by an incremental signal transmitter (1) are output by an incremental signal transmitter (1) on a first and a second incremental signal transmitter channel (AIN, BIN), as a function of the position or a change in position of the door, wherein the signals of the second incremental signal transmitter (BIN) have, compared to the signals of the first incremental signal transmitter channel (AIN) given an identical waveform, a phase shift whose phase angle is positive in the case of a first direction or rotational sense of the incremental signal transmitter (1) and negative in the case of a second, opposed direction or rotational sense of the incremental signal transmitter (1), wherein a converter (5) is connected downstream of the incremental signal transmitter (1), and the signals of the incremental signal transmitter channels (AIN, BIN) are fed to the converter (5) and signals which represent a second travel increment or angle increment which is a predefined integral multiple of the travel increment or angle increment are output on a first and second converter channel (AOUT, BOUT) by means of the converter (5), wherein the phase shift between the first and second converter channels (AOUT, BOUT) corresponds to the phase shift between the first and second incremental signal transmitter channels (AIN, BIN), **characterized in that** a finite automatic apparatus which is implemented in the converter (5) senses the present state of all of the signals, and the preceding state of at least one of the signals, of the incremental signal transmitter channels (AIN, BIN) and/or converter channels (AOUT, BOUT), and the state of the converter channels (AOUT, BOUT) is optionally changed in accordance with changes in state which can be identified in this way, that changes in state can be classified by the finite automatic apparatus as legal if they satisfy the criteria of a Gray code and can be classified as illegal if they do not satisfy these criteria and that the finite automatic apparatus initiates troubleshooting by an illegal change in state.

14. Method according to Claim 13, **characterized in that** the preceding state of at least one of the signals of the incremental signal transmitter channels (AIN, BIN) and/or converter channels (AOUT, BOUT) can be encoded by means of a jump into one of at least two loops of a program execution which are provided in the finite automatic apparatus, and the state of the converter channels (AOUT, BOUT) is changed or is left unchanged by a change in state as a function of the loop which has been respectively run through.

## Revendications

1. Dispositif de détection d'une position d'un groupe d'entraînement, dans lequel la position d'un capteur ( 1 ) incrémentiel peut être détectée avec une première précision décrite par un premier incrément de trajet ou d' angle et peut être envoyée à un convertisseur ( 5 ), par lequel la première position de la détection de position peut être diminuée à une deuxième précision décrite par un deuxième incrément de trajet ou d'angle,
**caractérisé**
**en ce que** dans le convertisseur ( 5 ) est mis en oeuvre un automate fini, en ce que par l'automate fini l'état présent de tous et l'état précédent d'au moins l'un des signaux des canaux ( AIN, BIN ) du capteur incrémentiel et/ou des canaux ( AOUT, BOUT ) du convertisseur peut être détecté et, conformément à des modifications d'état pouvant être identifiées de cette façon, l'état des canaux ( AOUT, BOUT ) du convertisseur peut être modifié, en ce que des modifications d'état peuvent être classées comme légales si elles satisfont aux critères d'un code de Gray et peuvent être classées comme illégales si elles ne satisfont pas ces critères et en ce que par une modification d'état illégale un traitement d'erreur peut être déclenché.

2. Dispositif suivant la revendication 1, **caractérisé en ce que** par le capteur ( 1 ) incrémentiel des signaux peuvent être émis sur un premier et un deuxième canal ( AIN, BIN ) de capteur incrémentiel, signaux qui représentent le premier incrément de trajet ou d'angle respectivement prescrit et parcouru par le capteur ( 1 ) incrémentiel, les signaux du deuxième canal ( BIN ) du capteur incrémentiel ayant un déphasage pour une même forme de signal par rapport aux signaux du premier canal ( AIN ) de capteur incrémentiel, dont l'angle de phase dans le cas d'un premier sens de direction ou de rotation du capteur ( 1 ) incrémentiel est positif ou, dans le cas d'un deuxième sens de direction de rotation opposé du capteur ( 1 ) incrémentiel, est négatif, le convertisseur ( 5 ) étant monté en aval du capteur ( 1 ) incrémentiel et les signaux des canaux ( AIN, BIN ) du capteur incrémentiel pouvant être envoyés au convertisseur ( 5 ) et au moyen du convertisseur ( 5 ) des signaux pouvant être émis sur un premier et un deuxième canal ( AOUT, BOUT ) du convertisseur, signaux qui représentent le deuxième incrément de trajet ou d'angle, qui est un multiple prescrit en nombre entier du premier incrément de trajet ou d'angle, le déphasage entre le premier et le deuxième canal ( AOUT, BOUT ) du convertisseur correspondant au déphasage entre le premier et le deuxième canal ( AIN, BIN ) du capteur incrémentiel.

3. Dispositif suivant l'une des revendications 1 ou 2, **caractérisé en ce que** le capteur ( 1 ) incrémentiel est constitué sous la forme d'un capteur d'impulsions de rotation.

4. Dispositif suivant l'une des revendications 1 à 3, **caractérisé en ce que** tous les signaux sont binaires.

5. Dispositif suivant l'une des revendications précédentes, **caractérisé en ce que** l'angle de phase est de +90° ou de -90°.

6. Dispositif suivant l'une des revendications précédentes, **caractérisé en ce que** le deuxième incrément de trajet ou d'angle est deux fois plus grand que le premier incrément de trajet ou d'angle.

7. Dispositif suivant l'une des revendications précédentes, **caractérisé en ce que** le convertisseur ( 5 ) comprend un microprocesseur.

8. Dispositif suivant la revendication 7, **caractérisé en ce que** le microprocesseur est constitué sous la forme d'un microcontrôleur.

9. Dispositif suivant la revendication 7 ou 8, **caractérisé en ce que** le processeur peut être mis dans un état défini au moyen d'un chien de garde et **en ce que** le chien de garde peut être mis à l'état initial ou remis à l'état initial par l'automate fini.

10. dispositif suivant l'une des revendications précédentes, **caractérisé en ce que** l'état précédent d'au moins l'un des signaux des canaux ( AIN, BIN ) du capteur incrémentiel et/ou des canaux ( AOUT, BOUT ) du convertisseur peut être codé par un saut dans au moins une boucle d'une exécution de programme d'au moins deux boucles prévues dans l'automate fini et, par une modification d'état, l'état des canaux ( AOUT, BOUT ) du convertisseur est modifié ou laissé en fonction de la boucle parcourue respectivement.

11. Dispositif suivant l'une des revendications précédentes, **caractérisé en ce qu'**il est prévu au moins une table de consultation dans l'automate fini.

12. Dispositif suivant l'une des revendications précédentes, **caractérisé en ce que** le groupe d'entraînement est un moteur d'une porte motorisée.

13. Procédé de détection d'une position d'un groupe d'entraînement, dans lequel il est émis par un capteur ( 1 ) incrémentiel, en fonction de la position ou d'une modification de position de la porte, sur un premier canal et un deuxième canal ( AIN, BIN ) du capteur incrémentiel des signaux, qui représentent un premier incrément de trajet ou d'angle prescrit respectivement et parcouru par le capteur ( 1 ) incrémentiel, les signaux du deuxième canal ( BIN ) du capteur incrémentiel ayant un déphasage, tout en ayant la même forme de signal, par rapport aux signaux du premier canal ( AIN ) du capteur incrémentiel, dont l'angle de phase, dans le cas d'un premier sens de direction ou de rotation du capteur (1) incrémentiel, est positif et, dans le cas d'un deuxième sens de direction de rotation opposé du capteur ( 1 ) incrémentiel, est négatif, dans lequel un convertisseur ( 5 ) est monté en aval du capteur ( 1 ) incrémentiel et les signaux des canaux ( AIN, BIN ) du capteur incrémentiel sont envoyés au convertisseur ( 5 ) et au moyen du convertisseur ( 5 ) sont émis, sur un premier et un deuxième canal ( AOUT, BOUT ) de convertisseur, des signaux, qui représentent un deuxième incrément de trajet ou d'angle, qui est un multiple prescrit en nombre entier du premier incrément de trajet ou d'angle, le déphasage entre le premier et le deuxième canal ( AOUT, BOUT ) du convertisseur correspondant au déphasage entre le premier et le deuxième canal ( AIN, BIN ) du capteur d'incrément,
**caractérisé**
**en ce que**, par un automate fini mis en oeuvre dans le convertisseur ( 5 ), on détecte l'état présent de tous et l'état précédent d'au moins l'un des signaux des canaux ( AIN, BIN ) du capteur incrémentiel et/ou des canaux ( AOUT, BOUT ) du convertisseur et, en fonction des modifications d'état pouvant être identifiées de cette façon, on modifie éventuellement l'état des canaux ( AOUT, BOUT ) du convertisseur, en ce que des modifications d'état sont classées comme légales par l'automate fini, lorsqu'elles satisfont les critères d'un code de Gray et sont classées comme illégales, lorsque ces critères ne sont pas satisfaits, et en ce que l'automate fini déclenche un traitement d'erreur pour des modifications d'état illégales.

14. procédé suivant la revendication 13, **caractérisé en ce que** l'état précédent d'au moins l'un des signaux des canaux ( AIN, BIN ) du capteur incrémentiel et/ou des canaux ( AOUT, BOUT ) du convertisseur est codé par un saut dans une boucle d'une exécution de programme d'au moins deux boucles prévues dans l'automate fini et, par une modification d'état, l'état des canaux ( AOUT, BOUT ) du convertisseur est modifié ou laissé en fonction de la boucle parcourue respectivement.
